# EUROPEAN PATENT SPECIFICATION

(11) **EP 0 936 714 B1**
(45) Date of publication and mention of the grant of the patent: **27.07.2005**
(21) Application number: 98500005.8
(22) Date of filing: 14.01.1998
(51) Int. Cl.: H02G 5/06

(54) **Improvements in electric energy conducting installations**
Verbesserungen in Bezug auf Leiterinstallationen fur elektrishe energie
Améliorations par rapport aux installations de conduction d'énergie électrique

(43) Date of publication of application: 18.08.1999
(73) Proprietor: CIAMA BUSBAR S.L., 08190 San Cugat del Valles (Barcelona) (ES)
(72) Inventor: Garcia-Maurino De Vigo, Luis, 08190 San Cugat Del Valles, (Barcelona) (ES)
(74) Representative: Gonzalez Vacas, Eleuterio

(56) References cited:
- EP-A- 0 338 948
- EP-A- 0 731 542
- US-A- 3 346 687
- US-A- 4 658 504

## Description

### OBJECT OF THE INVENTION

This invention relates to a series of improvements introduced in electric energy conducting installations, said improvements addressing both the means of mounting and insulating the bars which form the electrical conductors and the means of channelling said bars.

The installations to which the improvements of the invention apply are known as medium voltage electric lines, and are used particularly in power plants, large factories and locations where electric energy transport and distribution is called for.

### BACKGROUND OF THE INVENTION

Spanish invention patent No. 470.796 describes a medium voltage electric line channelling based on a plurality of insulated strips embedded in several layers of resin, the assembly being enclosed in a metal housing acting both as a screen against the resulting electric and magnetic fields and as a protection device.

The channelling obtained through the improvements claimed in the above invention patent No. 470.196 provides a set of segregated phase bars that are highly resistant to short-circuits and furthermore prevents problems in regard to condensations which until now have been evident in convectional channelling by completely removing the air inside the sheath, namely between the conductor and the conductor insulating layer, based precisely on the arrangement of the bars embedded within the insulating resin layers.

However, the conduction or channelling based on the improvements of invention patent No. 470.796 is affected by several problems and inconveniences such as failing to achieve an efficient cooling as a result of the metal sheath being fully closed along its perimeter. Additionally, the installation or channelling described in the above invention patent fails to take into account the arrangement of the bars forming the three phases of a medium voltage electrical line, the support means in the event that the bars are separated and embedded in individual molds, and the arrangement of the conduction bar strips nearer to each other.

EP-A-0 731 542 discloses an installation comprising the features of the preamble of claim 1.

### DESCRIPTION OF THE INVENTION

The invention is defined by the features of claim 1. A preferred embodiment is defined in claim 2.

The advocated improvements applicable to medium voltage electric energy conduction lines are foreseen not only for solving the above problems but also as a means of providing additional functions and an optimal structure for the installation or channelling of electric energy conducts.

More specifically, one of the improvements of the invention consists in that the connecting ends of the strips which form the conductors include holes with built-in threading allowing the connections to be extended and the strips to be positioned closer to each other. Furthermore, the connections between the strips are additionally fitted with a thermally formed sheath enabling demolding, when necessary.

Concerning the metal sheath for the installation or channelling as such, it is formed by aluminum plate sections with drilled-in holes providing improved cooling features, the shapes being attached to each other to form the channelling proper, said attachment involving parts which are inserted between the various lengths forming the overall channelling extension.

In the event that the bars are mounted independently, individual elements are provided through which the bars penetrate, said elements being fitted on their upper and lower ends with rods for attachment both to the metal sheath which forms the above shapes and to the insulating supports which securely join each conductor bar module to the assembly, and in turn attaching the assembly to the structure holding the channelling.

A further improvement of the invention lies in the fact that the conductor strips hold the ends of the insulating elements, which are fitted with steps providing a gap between the strips at the point where the strips are no longer insulated, thus providing a further sliding length, the strips being slidable in respect to the insulation.

These improvements provide several advantages, as indicated hereunder:
- Resilient attachments throughout the length of the installation.
- Rapid and secure assembly through nuts embedded in the conductor plate end attachment lengths.
- Rational grouping of the conductor strips.
- Greater installation safety deriving from the steps corresponding to the insulation or resins provided at the plate ends.
- Prevention of insulation failures through an inner insulator which separates the resin expansions and acts as a means of insulation for the strips which form the conductors.
- Insulation of the electromagnetic fields based on the external magnetic housing formed by the perforated aluminum metal envelope.
- Attachment blocks, independent from one phase to the other, even in the grouped models, for the purpose of facilitating the dismounting operation.

### DESCRIPTION OF THE DRAWINGS

In order to add to the description as set forth and help toward a better understanding of the characteristics of the invention based on a preferred example of a practical embodiment, a set of drawings is attached which forms an integral part of the description and wherein the following is shown in an illustrative and non-limiting character:
Figure 1 shows a view according to a general perspective of a detail corresponding to an electric energy conduction installation implemented according to the improvements of the invention, wherein the metal housing presents specific portions or profiles shown in exploded views.
Figure 2 shows a general perspective view of the profiles and attachment elements which form a part of the channelling for the electric energy conducting installation implemented according to the improvements which are the object of the invention.
Finally, Figure 3 shows a detail of a perspective view of an individually mounted conductor bar.

### PREFERRED EMBODIMENT OF THE INVENTION

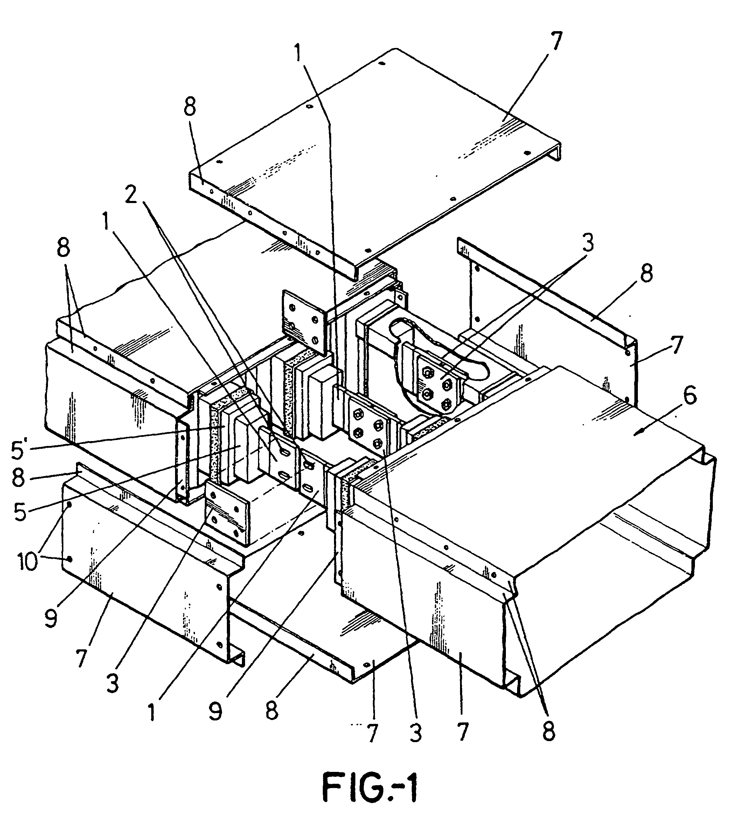

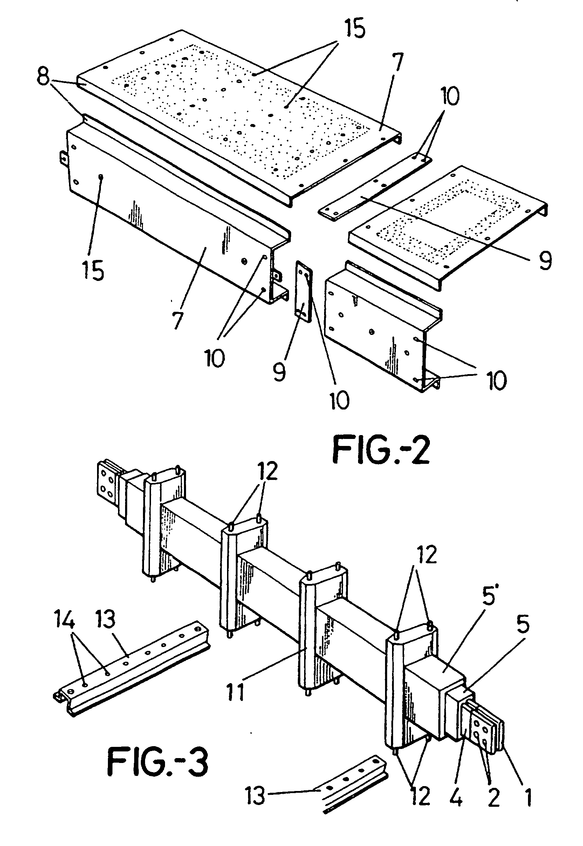

As can be seen from these figures, the installation or channelling of the electric energy conducting bars according to the improvements of the invention comprises conductor strips (1) at the ends of which holes are provided, said holes being fitted with embedded threads (2) for the screws which attach the plates (3) which form the attachment elements between said strips (1), which strips are covered with a resin, polyamide or epoxy resin insulating sheath (4), said sheath (4) forming or determining steps in said end portions of the strips (1) which separate the strips from one another when no longer insulated, as can be seen in Figures 1 and 3, thus enlarging the sliding length and providing added safety to the installation.

The insulation provided by the resins (4) is complemented with an insulating cover (5) which in turn is embedded in a further covering layer (5'), thus forming the corresponding electric energy conducting bar.

Thus, the bars as shown in Figure 1 are arranged inside the metal housing (6) formed by a series of metal - specifically aluminum - shapes or sheets (7) with wing (8) forming edges which adhere longitudinally to one another via rivets, the plates (7) being attached to each other along their perimeter by intermediate attachment parts (9), said parts (9) and plates (7) also being provided with holes (10) for inserting the attachment rivets or screws, the plates (7) also having additional holes (15) for cooling purposes.

The metal housing (6) thus formed serves to conduct the ground and induced currents and to enclose the three grouped and balanced phases forming the respective conductor bars constructed according to the above description. Evidently, the metal housing (6), made of aluminum and provided with holes, not only enables ground connection and provides an effective sheathing means by considerably reducing the outward-leading electromagnetic field but also prevents distortions to the electronic equipment and the hot points of the metal structures, in addition to preventing access to live voltage and hot areas.

If the bars are mounted individually, as shown in Figure 3, the ends of the individual elements (11) provided along the conductor bar are fitted with rods (12) for securing the assembly to the insulating supports (13) via the lodging of the rods (12) inside the holes (14) in said insulating supports (13), which in turn provide a means of attachment of each bar module to the assembly and of the latter to the structure onto which the channelling is mounted.

Referring once again to the conductor strips (1), the insulating cover (4) on each strip (1), separating the strip from the corresponding cooling mass or insulation (5), allows for individual expansion and contraction, thus preventing failures occurring in parts adhered to each other as a result of the different expansion coefficients of the copper in the strips (1) and the insulating/cooling mass. In other words, the resins which form the insulating cover (4) on the strips (1) provide a mens of separating the strips (1) from the insulating layer (5) and allow the strips to slide inside the insulation, thus avoiding fractures which normally occur when both parts are secured to one another.

The attachment of a module bar to a subsequent bar is performed inside a thermally formed module which provides a protection upon filling the connection and allows the bar to operate through expansion and contraction when the current is either flowing or not flowing, without affecting the external cooling sheath.

This description need not be more extensive for an expert on the subject to comprehend the scope of the invention and the advantages deriving therefrom.

The materials, shape, size and arrangement of the elements are liable to variation within the scope of the appended claims.

## Claims

1. Installation formed by bars composed of conductor strips (1) embedded in a layer of insulating cover (4) based on resins, the overall assembly being installed under a layer of cooling insulation (5) complemented by an additional cover (5'), also of an insulating nature, whereby the resin insulating cover (4) at the ends of the strips (1), cooling cover insulation (5) and additional cover insulation (5') form steps which separate the non-insulated ends of the strips (1) from one another, an additional feature consisting in that the conductor bars forming the strips (1), cover and insulation are arranged inside a metal housing (6) formed by aluminum sheets (7) with cooling holes (11), which sheets (7) are fitted with end wings (8) mutually attached by means of rivets or screws, the perimeter attachment of the sheets (7) using intermediate parts (9) also fitted with holes (10) for inserting of the attachment rivets or screws **characterized in that** said strip (1) end portions are provided with holes fitted with embedded threads (2) for the screws which attach the strips (1) axially to one another through lateral plates (3), the attachment being complemented with a thermally formed sheath which, upon sealing the connection, prevents the resin from blocking the electric connection and thus allows the sliding of the bars.

2. Installations, according to claim 1, characteristic in that the individually mounted conductor bars are attached to respective insulating supports (13) through which the assembly is in turn adhered to the general structure onto which is mounted the channelling, the mounting onto said insulating supports (13) involving rods (12) lodged in holes (14) drilled in the supports (13), which rods pertain to individual elements (11) forming a part of the module or corresponding conductor bar.

## Patentansprüche

1. Installation, die durch Stangen gebildet ist, die aus Leitungsstreifen (1) bestehen, die in einer Schicht einer auf Harzen basierenden Isolierungsabdeckung (4) eingebettet sind; wobei der Gesamtzusammenbau unter einer Schicht einer Kühlisolierung (5) installiert ist, die durch eine weitere Abdeckung (5'), die auch eine Isolierungsnatur besitzt, ergänzt wird, wobei die Harzisolierungsabdeckung (4) an den Enden der Streifen (1), die Kühlisolierung (5) und die weitere Abdeckung (5') Stufen bilden, die die nicht isolierten Enden der Streifen (1) voneinander trennen, ein weiteres Merkmal besteht darin, dass die Leitungsstangen, die die Streifen (1) bilden, die Abdeckung und die Isolierung im Innern eines Metallgehäuses (6) angeordnet sind, das durch Aluminium-Platten (7) mit Kühllöchern (11) gebildet ist, dessen Platten (7) mit Endflügeln (8) eingerichtet sind, die gegenseitig durch Nieten oder Schrauben befestigt sind, wobei die äußere Befestigung der Platten (7) Zwischenteile (9) verwendet, die ebenfalls mit Löchern (10) zur Einfügung der Befestigungsnieten oder -schrauben eingerichtet sind, **dadurch gekennzeichnet, dass** besagter Streifen (1) und die Teilstücke mit Löchern ausgestattet sind, die mit eingebetteten Gewinden (2) für die Schrauben eingerichtet sind, die die Streifen (1) axial über seitliche Platten (3) untereinander befestigen, wobei die Befestigung mit einer thermisch geformten Umhüllung ergänzt wird, die kurz nach dem Verschließen der Verbindung das Harz an der Blockierung der elektrischen Verbindung hindert und dies gestattet das Gleiten der Stangen.

2. Installation nach Anspruch 1, **dadurch** montées de manière individuelle sont reliées à leurs supports d'isolation respectifs (13) par le biais desquels l'assemblage est à son tour associé à la structure générale sur laquelle est montée la canalisation, lesdits supports d'isolation (13) comprenant des barres (12) insérées dans des trous (14) percés dans les supports (13), les barres appartenant à des elements individuels (11) qui forment une partie du module ou de la barre d'entraînement correspondante.

## Revendications

1. Installation formée avec des barres composées de bandes d'entraînement (1) enveloppées dans une couche de revêtement isolant (4) fabriquée à partir de résine ; l'ensemble étant installé sous une couche d'isolation de refroidissement (5) complétée par une couche supplémentaire (5'), également de nature isolante, où la couche de revêtement isolant en résine (4) située aux extrémités des bandes (1), forme une couche de revêtement de refroidissement (5) et une couche de revêtement supplémentaire (5') qui séparent les extrémités non isolées des bandes (1) l'une de l'autre ; une caractéristique supplémentaire consistant en ce que les barres d'entraînement qui composent les bandes (1), le revêtement et l'isolation se trouvent à l'intérieur d'un étui en métal (6) composé de feuilles de métal (7) dotées de trou de refroidissement (11), dont les feuilles (7) sont équipées d'ailes (8) au niveau des extrémités reliées entre elles au moyen de rivets ou de vis, le périmètre d'attachement des feuilles (7) utilise des éléments intermédiaires (9) disposant également de trous (10) afin de pouvoir placer les rivets ou les vis de fixation, **caractérisée en ce que** les extrémités de ladite bande (1) disposent de trous équipés de fils enrobés (2) pour les vis destinées à relier axialement les bandes (1) l'une à l'autre à travers des plateaux latéraux (3), la fixation étant complétée d'une gaine thermique qui, au moment de la fermeture de l'assemblage, empêchera la résine d'entraver les branchements électriques pour permettre le coulissement des barres.

2. Des installations, selon la revendication 1, **caractérisées en ce que** les barres d'entraînement **gekennzeichnet, dass** die einzeln montierten Leitungsstangen an den jeweiligen Isolierungsträgern (13) befestigt sind, über die der Zusammenbau wiederum an der Gesamtstruktur angehaftet ist, auf der die Kanalisierung montiert ist, wobei die Montage auf besagten Isolierungsträgern (13) Stangen (12) einschließt, die in Löchern (14) untergebracht sind, die in die Träger (13) gebohrt sind, deren Stangen zu einzelnen Elementen (11) gehören, die ein Teil des Moduls oder eine entsprechende Leitungsstange bilden.
